# EUROPÄISCHE PATENTANMELDUNG

(11) **EP 1 640 140 A2**
(43) Veröffentlichungstag der Anmeldung: **29.03.2006**
(21) Anmeldenummer: 05020047.6
(22) Anmeldetag: 15.09.2005
(51) Int. Cl.: B29C 65/00, B65B 51/30, B65B 9/20

(54) **Verfahren und Vorrichtung zum Bewegen einer Schweissbacke**

(30) Priorität: 28.09.2004 DE 102004046971
(71) Anmelder: ROVEMA VERPACKUNGSMASCHINEN GMBH, 35463 Fernwald (DE)
(72) Erfinder: Kammler, Roman, Dr., 67547 Worms (DE); Baur, Walter, Dr., 63584 Gründau (DE)

(57) **Zusammenfassung**

Um eine Schweißbacke (1, 6), insbesondere eine Schweißbacke (1, 6) einer Quersiegelstation (2) einer vertikalen Schlauchbeutelmaschine (3), wobei die Schweißbacke (1, 6) mit einem Bewegungspunkt (A) entlang einer geschlossenen Bahn (4) umlaufend oder entlang einer linienförmigen Bahn (29) hin und her bewegt wird, um an einem Aufprallpunkt (P) mit einer Normalkomponente (VN) einer Geschwindigkeit (V) gegen einen Widerstand, insbesondere eine zweite, gegenläufige Schweißbacke (1, 6) zu stoßen, in leiser und Material schonender Weise aufprallen zu lassen, wird vorgeschlagen, dass die Normalkomponente (VN) im Aufprallpunkt (P), welche einer Aufprallgeschwindigkeit der Schweißbacke (1, 6) entspricht, beliebig einstellbar ist. Diese Einstellbarkeit bzw. Regelung kann durch ein entsprechendes geschwindigkeitsgenaues Betreiben eines elektromagnetischen Linearantriebes, der die Normalkomponente (VN) erzeugt, erreicht werden.

## Beschreibung

Die vorgeschlagene Neuerung betrifft den Verpackungsmaschinenbau und dort ein Verfahren zum Bewegen einer Schweißbacke, insbesondere einer Schweißbacke einer Quersiegelstation einer vertikalen Schlauchbeutelmaschine, sowie eine derart betriebene vertikale Schlauchbeutelmaschine.

Aus der DE 44 25 207 A ist es bekannt, eine Schweißbacke einer Quersiegelstation einer vertikalen Schlauchbeutelmaschine entlang einer geschlossenen Bahn zu bewegen. Dabei weist die Bahn einen geraden Abschnitt auf, welcher zum Anliegen an einem zwischen der Schweißbacke und einer zweiten, gegenläufigen Schweißbacke zusammengedrückten Folienschlauches vorgesehen ist. Dabei werden der Folienschlauch und die Schweißbacke in Richtung des geraden Abschnittes mit gleicher Geschwindigkeit weiterbewegt, um den Folienschlauch durch die Wärmeeinwirkung der Schweißbacken innerhalb einer Siegelzeit zu verschweißen. Zwei in senkrecht zueinander verlaufende Richtungen wirkende, die Schweißbacke bewegende Antriebe dienen der Erzeugung einer Umlaufbewegung der Schweißbacke, wobei innerhalb einer Zykluszeit ein vollständiger Backenumlauf erreicht wird.

Bei einer anderen vertikalen Schlauchbeutelmaschine ist lediglich ein Antrieb dazu vorgesehen, zwei nur in horizontaler Richtung aufeinander zu und voneinander weg bewegbare Schweißbacken entlang jeweils einer linienförmigen Bahn zu bewegen, um einen Folienschlauch jeweils bei einem Folienstillstand quer zu seiner Transportrichtung zu verschweißen.

Die bekannten Verfahren zum Betreiben dieser Schweißbacken haben gemeinsam, dass jede Schweißbacke gegen eine gegenläufige Schweißbacke bewegt wird, um an einem Aufprallpunkt mit einer Normalkomponente einer Geschwindigkeit der Schweißbacke gegen eine zweite, gegenläufige Schweißbacke zu stoßen, wobei der Folienschlauch zwischen den Siegelflächen der Schweißbacken zusammengedrückt wird, um den Folienschlauch mittels über die Siegelflächen in den Folienschlauch eingebrachte Wärme bei einem ausgeübten Druck zu verschweißen. Es ist ein Antrieb dazu vorgesehen, die Schweißbacke in einer Normalrichtung zu bewegen, um derart die Normalkomponente der Geschwindigkeit der Schweißbacke zu erzeugen.

Die bekannten Verfahren haben den Nachteil, dass die Normalkomponente im allgemeinen zu groß ist. Dies bedeutet, dass die Schweißbacken im Regelfall zu heftig gegeneinander prallen, um einen Schweißvorgang zu beginnen. Die Folge sind relativ laute, stark schwingende Verpackungsmaschinen. Die Schweißbacken dieser Maschinen haben auch eine verringerte Nutzungsdauer, da die Siegelflächen durch das harte Aufeinanderschlagen verändert werden. So ist die Standzeit für gezahnte Siegelflächen in Folge der hohen Beanspruchung relativ kurz. Dieser Nachteil wird auch bei Verpackungsmaschinenaggregaten gesehen, bei denen ein Schweißvorgang nur mittels einer einzigen Schweißbacke ausgeführt wird, indem die Schweißbacke gegen einen zu verschweißenden Folienschlauch oder eine umgelegte Folienbahn bewegt wird, um die Folie gegen einen ortsfesten Widerstand zu drücken und derart zu verschweißen.

Der Erfindung liegt die Aufgabe zu Grunde, ein Verfahren gemäß dem Oberbegriff des Anspruchs 1 derart weiterzubilden, dass die erwähnten Nachteile beseitigt werden können.

Gelöst ist die Aufgabe gemäß dem kennzeichnenden Teil des Anspruchs 1. Danach ist die Normalkomponente der Geschwindigkeit einer Schweißbacke im Aufprallpunkt, welche einer Aufprallgeschwindigkeit der Schweißbacke entspricht, beliebig einstellbar.

Das vorgeschlagene Verfahren hat den Vorteil, dass das Gegeneinanderschlagen der Schweißbacken bzw. das Aufprallen einer Schweißbacke gegen einen Widerstand beliebig eingestellt werden kann. Für das Aufprallen ist die Normalkomponente der Geschwindigkeit der Schweißbacke die zu regelnde Größe. In analoger Weise könnte auch die Geschwindigkeit an sich geregelt werden. Da die Geschwindigkeit jedoch eine vektorielle, d. h. jeweils mit einer Richtung versehene Größe ist, und nur die Geschwindigkeitskomponente für den Aufprall wesentlich ist, welche für eine Annäherung einer Schweißbacke an den Aufprallpunkt sorgt, ist eine Regelung der Geschwindigkeit direkt vor oder im Aufprallpunkt bei einer vorgegebenen Bahn immer eine Regelung der Normalkomponente.

Mit dem vorgeschlagenen Verfahren ist die Aufprallgeschwindigkeit von Schweißbacken auf einen relativ niedrigen Wert möglich. Dadurch werden Verpackungsmaschinen ruhiger, leiser und weisen weniger Schwingungen auf. Die Lebensdauer der Schweißbacken, insbesondere der Zahnung oder Profilierung ihrer Siegelflächen wird erhöht.

Eine geeignete Vorrichtung zum Ausführen des Verfahrens ist gemäß Anspruch 8 dadurch erreicht, dass die Vorrichtung eine vertikale Schlauchbeutelmaschine ist, welche zum Bewegen der Schweißbacke zwei jeweils als elektromagnetischer Linearantrieb, der nach dem Schwebebahnprinzip funktioniert ausgestaltete, senkrecht zueinander wirkende Antriebe aufweist, wobei ein die Normalkomponente erzeugender Antrieb von einer Steuereinrichtung betrieben wird, um eine vorgewählte Normalkomponente im Aufprallpunkt zu erzeugen. Prinzipiell wird nur der die Normalkomponente erzeugende Antrieb als derartiger Linearantrieb benötigt, um eine exakte Bewegung der Schweißbacke, welche durch einen Bewegungspunkt beschrieben werden kann, zu erzeugen. Die Normalkomponente wird durch Ansteuerung dieses Antriebes absolut orts- und betragsgenau im Aufprallpunkt vorgegeben. So können Aufprallgeschwindigkeiten oder Normalkomponenten oder Geschwindigkeiten an sich von z. B. 0,02 m/sec, 0,05 m/sec oder 0,1 m/sec genau vorgewählt werden.

Vorteilhafte Ausgestaltungen des vorgeschlagenen Verfahrens und der vorgeschlagenen Vorrichtung sind in den Ansprüchen 2 bis 7, sowie 9 und 10 beschrieben.

Eine einfache Regelung ist erreicht, wenn die Geschwindigkeit des Antriebs derart geregelt wird, dass die Normalkomponente des Bewegungspunktes im Aufprallpunkt einem vorgegebenen Sollwert entspricht (Anspruch 2). Der Bewegungspunkt ersetzt dabei quasi die eigentliche Bewegung der Siegelfläche der Schweißbacke. Die Position der Siegelfläche ist entscheidend für den Aufprall. Der Sollwert kann beliebig eingestellt werden (Anspruch 3), indem der für die Normalkomponente zuständige Antrieb entsprechend angesteuert und betrieben wird.

Das Verfahren ist besonders zum ruhigen und materialschonenden Betreiben einer vertikalen Schlauchbeutelmaschine geeignet, wobei die Schweißbacke einen Folienschlauch mittels Quernähten verschweißt, und mittels einer Trenneinrichtung jeweils ein Schlauchbeutel mit einer bestimmten Beutellänge vom Folienschlauch abgetrennt wird (Anspruch 4).

Sind die beiden Antriebe getriebelos miteinander und mit der Schweißbacke verbunden (Anspruch 9), so ist eine direkte Umsetzung der zeitgenau angesteuerten Ortskoordinaten der Antriebe ohne Getriebe wie Kurbel, Zahnstange oder Riemen und ohne Übersetzung möglich, um einen exakten Aufprallpunkt vorzugeben.

Ist gemäß Anspruch 10 dabei die Schweißbacke über eine starre Verbindung mit dem beweglichen Teil eines horizontal wirkenden Antriebs verbunden, und das antreibende Teil dieses Antriebs mit dem in vertikaler Richtung beweglichen Teil des anderen Antriebs starr verbunden (Anspruch 9), so kommt keine Elastizität zwischen den Antrieben und der Schweißbacke vor. Folglich ist ein sehr exaktes, auf Bruchteile eines Millimeters genaues Versetzen der Schweißbacke hin zum Aufprallpunkt zu exakten Zeitpunkten, mit exakten Geschwindigkeiten möglich. Mit dieser Technik kann ein weiteres Verfahrensmerkmal erreicht werden, wonach der Bewegungspunkt mit einer Genauigkeit von 0,01 bis 0,1 mm hinsichtlich seiner Ortskoordinaten in den Richtungen der Wirkung der Antriebe vorgewählt wird (Anspruch 5).

Gemäß Anspruch 6 kann ein Siegelweg vorgegeben werden, welcher sich aus einer Vorwärmstrecke oder einer Abstreifstrecke (Strippweg) für ein Vorwärmen oder Abstreifen mittels einer Abstreifeinrichtung des Gegenstandes mit vom Gegenstand beabstandeter Schweißbacke, dem Aufprallpunkt, dem eigentlichen, effektiven Siegelweg ab dem Aufprallpunkt und wahlweise einer Kühlstrecke zum Abkühlen der Folie bei von der Folie beabstandeter Schweißbacke, währenddessen Kühlluft von einem an der Schweißbacke vorgesehenen Kühlluftauslass auf den Gegenstand geblasen wird, zusammensetzt.

Es kann auch gemäß Anspruch 7 für die Vorwärmstrecke bzw. die Abstreifstrecke, den effektiven Siegelweg und wahlweise die Kühlstrecke jeweils ein bezüglich seiner Länge und seinen Ortskoordinaten frei wählbarer, parallel zum geraden Abschnitt verlaufender Abschnitt vorgesehen werden, auf dem sich der Bewegungspunkt entlang bewegt, damit von der Schweißbacke bzw. einer an ihr befestigten Zusatzeinrichtung die entsprechende Funktion ausgeübt wird. Dies ist ebenso mit den vorgeschlagenen Linearantrieben in exakter Weise möglich.

lm folgenden werden das vorgeschlagene Verfahren und eine nach dem vorgeschlagenen Verfahren betreibbare vertikale Schlauchbeutelmaschine an Hand von Ausführungsbeispiele darstellenden Figuren näher beschrieben. Es zeigt:
- Figur 1: in einer Seitenansicht eine vertikale Schlauchbeutelmaschine mit gegeneinander bewegbaren Schweißbacken einer Quersiegelstation;
- Figur 2: in einer Seitenansicht zwei senkrecht zueinander wirkende Antriebe zum Bewegen eines Bewegungspunktes A der einen Schweißbacke der Figur 1 entlang einer umlaufenden Bahn;
- Figur 3: in einer schematischen Darstellung den Umlauf zweier gegeneinander bewegbarer, entlang eines effektiven Siegelweges Zseff den Folienschlauch der Figur 1 verschweißenden Schweißbacken, welche in einem Aufprallpunkt P gegeneinander stoßen;
- Figur 4: in einer schematischen Darstellung den Schweißbackenumlauf entsprechend Figur 3, jedoch mit einem um eine Vorwärmstrecke und eine Kühlstrecke reduzierten effektiven Siegelweg, und einem anderen Aufprallpunkt P;
- Figur 5: in einer schematischen Darstellung ein Aufeinanderprallen zweier Siegelflächen von umlaufenden Schweißbacken, charakterisiert durch zwei gegeneinander bewegte Bewegungspunkte A, welche in einer Siegelebene S an einem Aufprallpunkt P aufeinanderstoßen, wobei die Normalkomponenten VN der Geschwindigkeiten V zum Aufprallpunkt P hin zurückgenommen werden, und dort konstant sind, sowie
- Figur 6: in einer schematischen Darstellung analog Figur 5 ein aufeinanderprallen zweier lediglich hin und her bewegter Schweißbacken.

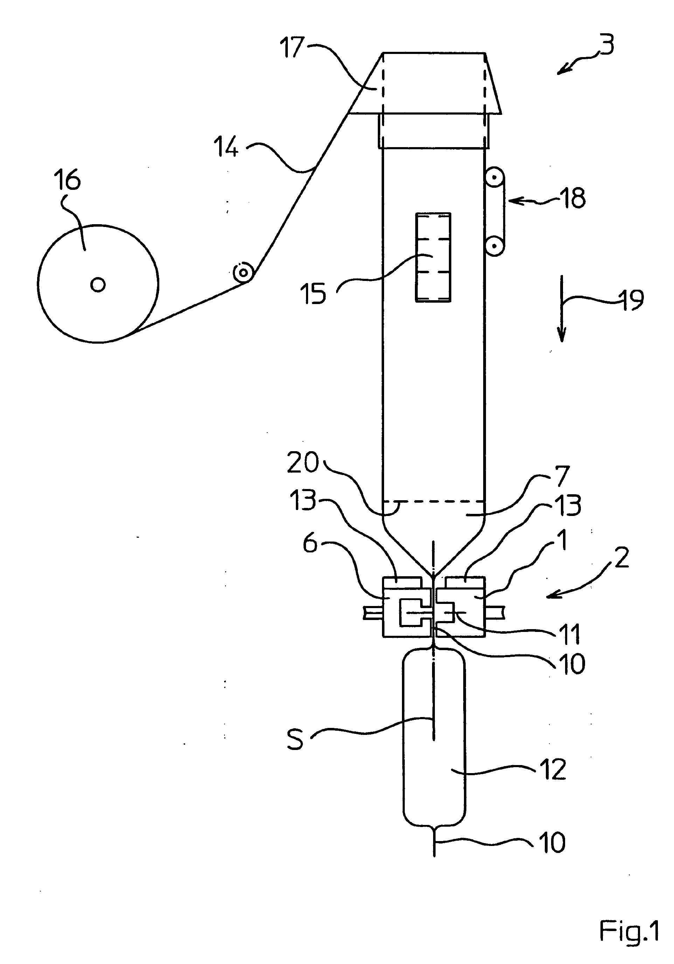

Bei einer vertikalen Schlauchbeutelmaschine 3 wird eine Folienbahn 14 mittels eines Abzuges 15 von einer Vorratsrolle 16 abgezogen, über eine Formschulter 17 gezogen und dabei zu einem Folienschlauch 7 geformt (Figur 1). Der Folienschlauch 7 wird mittels einer Längssiegeleinrichtung 18 in Transportrichtung 19 verschweißt und durch ein Füllrohr 20 befüllt. Zwei gegeneinander bewegbare, umlaufende Schweißbacken 1, 6 dienen dazu den Folienschlauch 7 quer zur Transportrichtung 19 mittels Quernähten 10 zu verschweißen. Eine Trenneinrichtung 11 in einer Schweißbacke 1 dient dazu, jeweils einen Schlauchbeutel 12 mit einer bestimmten Beutellänge vom Folienschlauch 7 abzutrennen.

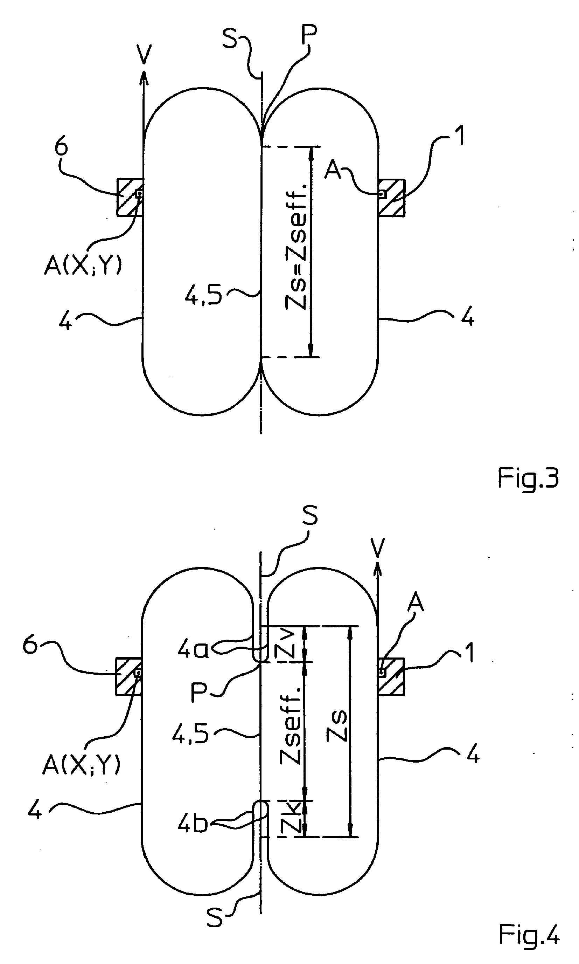

Die Schweißbacken 1, 6 werden derart betrieben, dass sie gegenläufig umlaufen, um längs eines effektiven Siegelweges Zseff die Verschweißung des mit gleicher Geschwindigkeit wie die Schweißbacken 1, 6 nach unten bewegten Folienschlauch 7 auszuführen (Figur 3). Beide Schweißbacken 1, 6 werden dazu entlang einer jeweils geschlossenen Bahn 4 bewegt. Jede Bahn 4 weist einen geraden Abschnitt 5 auf, welcher zum Anliegen an dem zwischen den Schweißbacken 1, 6 zusammengedrückten Folienschlauch 7 vorgesehen ist. Dabei werden der Folienschlauch 7 und die Schweißbacken 1, 6 in Richtung des geraden Abschnittes 5 mit konstanter Geschwindigkeit weiterbewegt, um den Folienschlauch 7 durch die Wärmeeinwirkung der Schweißbacken 1, 6 innerhalb einer Siegelzeit ts zu verschweißen.

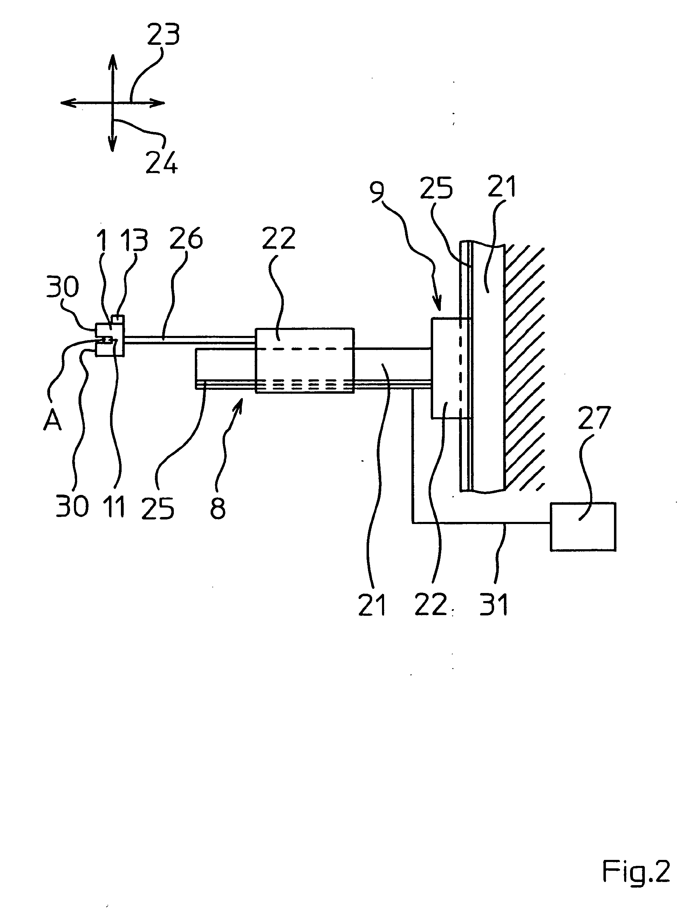

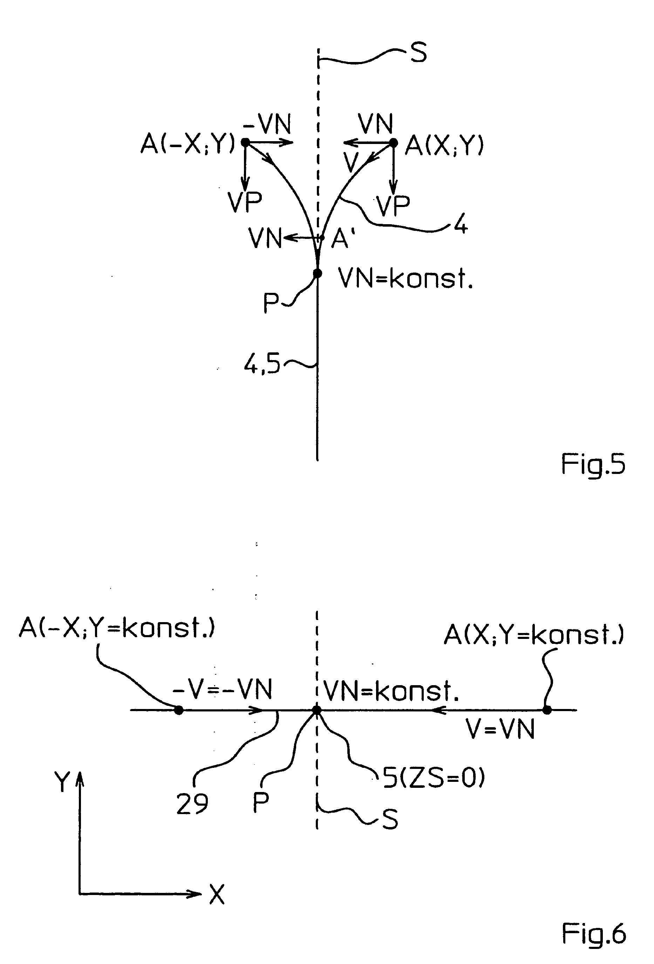

Es könnte aber auch ein Siegelweg Zs vorgegeben werden, welcher sich aus einer Vorwärmstrecke Zv für ein Vorwärmen des Gegenstandes mit vom Gegenstand beabstandeter Schweißbacke 1, dem eigentlichen, effektiven Siegelweg Zseff und einer Kühlstrecke Zk zum Abkühlen des Gegenstandes bei vom Gegenstand beabstandeter Schweißbacke 1, währenddessen Kühlluft von einem an der Schweißbacke 1 vorgesehenen Kühlluftauslass 13 auf den Gegenstand geblasen wird, zusammensetzt (Figur 4). Damit diese Umstellung der Siegelwege Zs mit allen Orts- und Zeitparametem in einfacher Weise möglich ist, wurde für die Vorwärmstrecke Zv, dem effektiven Siegelweg Zseff und die Kühlstrecke Zk jeweils ein bezüglich seiner Länge und seinen Ortskoordinaten frei wählbarer, parallel zum geraden Abschnitt 5 verlaufender Abschnitt 4a, 5, 4b vorgesehen, auf dem sich der Bewegungspunkt A entlang bewegt. Dazu werden die Antriebe 8, 9 (Figur 2) derart betrieben, dass entlang einer Bahnkrümmung beide Antriebe 8, 9 gleichzeitig betrieben werden und entlang eines geraden Abschnittes 4a, 5, 4b nur der Antrieb 9 genutzt wird, damit einem Bewegungspunkt A der Schweißbacke 1, 6 in jedem die Bahn 4 beschreibenden Punkt frei ausgewählt, eine vorgegebene Geschwindigkeit V und eine vorgegebene Beschleunigung a in Richtung einer frei gewählten Bewegungsrichtung des Bewegungspunktes A zugeordnet wird. D. h. die geraden Abschnitte 4a, 5, 4b, sowie ihre genauen Längen und Ortskoordinaten können frei programmiert werden. An genau vorgegebenen Orten können also genau vorgegebene Geschwindigkeiten und, aus Gründen eines ruhigen Backenumlaufes, auch genau vorgegebene Beschleunigungen für die Schweißbacken 1, 6 vorgegeben werden. Auch die Rücksetzzeit zum erneuten Ansetzen der Schweißbacken 1, 6 an den Folienschlauch 7 und die Zykluszeit (Zeit für einen Backenumlauf) können frei ausgewählt werden. Eine entsprechende Software bringt die vorgewählten Parameter in die gewünschte Abhängigkeit und informiert über nicht zusammenpassende Eingaben.

Damit der Bewegungspunkt A, welcher mit einer Genauigkeit von 0,01 bis 0,1 mm hinsichtlich seiner Ortskoordinaten in den Richtungen 23, 24 vorgewählt werden kann, auch derart ortsgenau bewegt werden kann, sind zum Bewegen der Schweißbacken 1, 6 jeweils zwei als elektromagnetischer Linearantrieb, der nach dem Schwebebahnprinzip funktioniert, ausgestaltete, senkrecht zueinander wirkende Antriebe 8, 9 vorgesehen. Diese Antriebe 8, 9 sind mit einer Steuereinrichtung 27 verbunden, um den Bewegungspunkt A jeder Schweißbacke 1, 6 bezüglich seiner Ortskoordinaten mit einer koordinatenabhängigen Geschwindigkeit V und einer koordinatenabhängigen Beschleunigung a zu versehen. Dabei könnte auch allein aus den Geschwindigkeitswerten und den Beschleunigungswerten (Betrag und Richtung) auf die geänderten Ortskoordinaten (pro Zeiteinheit) geschlossen werden.

Zur Vermeidung irgendeiner Ortsungenauigkeit sind zum einen beide Antriebe 8, 9 getriebelos miteinander und mit einer Schweißbacke 1, 6 verbunden. Zum anderen sind ortsverändernde Elastizitäten dadurch vermieden, dass jede Schweißbacke 1, 6 über eine starre Verbindung 26 mit dem beweglichen Teil 22 des horizontal wirkenden Antriebs 8 verbunden ist, und dass das antreibende Teil 21 dieses Antriebs 8 mit dem in vertikaler Richtung beweglichen Teil 22 des anderen Antriebs 9 starr verbunden ist.

Die frei wählbaren Geschwindigkeits- und Beschleunigungswerte erlauben in jedem Punkt der Bahn 4 eine ideale Backenbewegung, auch bei relativ kompliziertem Bahnverlauf.

Ein Aufeinanderprallen der Siegelflächen 30 der Schweißbacken 1, 6 geschieht jeweils in einem Aufprallpunkt P (Figur 3, Figur 4), ab dem ein effektiver Siegelweg Zseff beginnt. Dieser Aufprallpunkt P liegt in einer Siegelebene S (Figur 5). Für die Aufprallheftigkeit ist die Normalkomponente VN der Geschwindigkeit V der Schweißbacken 1, 6 im Aufprallpunkt P maßgebend. Um ein sanftes Aufeinanderstoßen der Siegelflächen 30 zu erreichen, wird die Normalkomponente VN eines jeweils in einer Siegelflächenebene mittig liegende Bewegungspunktes A durch entsprechendes Ansteuern der beiden Antriebe 8, welche jeweils eine Schweißbacke 1, 6 in Normalrichtung bewegen, mittels einer Steuereinrichtung 27, die über jeweils eine Leitung 31 (Figur 2) mit jeweils einem antreibenden Teil 21 eines Antriebs 8 verbunden ist, gesteuert.

Die Normalkomponente VN im Aufprallpunkt P, welche einer Aufprallgeschwindigkeit der Schweißbacke 1, 6 entspricht, ist beliebig einstellbar, und im Ausführungsbeispiel mit V = 0,05 m/sec konstant bei jedem Backenumlauf. Die Normalkomponente VN des Bewegungspunktes A im Aufprallpunkt P entspricht diesem vorgegebenen Sollwert.

In einem anderen Ausführungsbeispiel (Figur 6) wird ein Folienschlauch in einer Siegelebene S von gegeneinander bewegten Schweißbacken zusammengedrückt und an einem (mathematischen) Aufprallpunkt P verschweißt. Da die Schweißbacken nicht in einer y-Richtung bewegt werden, ist der Schweißweg Zs = 0. Dies entspricht dem sogenannten getakteten oder diskontinuierlichen Folientransport. Bei dieser Ausführung wird kein Antrieb benötigt, um eine Bewegung in y-Richtung zu überlagern. Ein einziger, in horizontaler x-Richtung wirkender, nach dem Schwebebahnprinzip funktionierender Linearantrieb ist hierbei für jede Schweißbacke vorgesehen. Diese beiden Antriebe werden angesteuert, um die Normalkomponente bei jeweils einer Backenbewegung entlang einer linienförmigen Bahn 29 hin zum Aufprallpunkt P auf einen geringen Wert VN = Konst. Zu verzögern. Entsprechend schnell wird ein bewegliches Teil 22, welches über einem antreibenden Teil 21 des entsprechenden Antriebs 8 schwebt, und über die Führung 25 geführt wird, relativ zu einem antreibenden, ortsfesten Teil 21 versetzt. Beim Gegenstand der Figur 2 wäre dies gegeben, wenn der in vertikaler Richtung 24 versetzende Antrieb 9 abgeschaltet wäre.
- 1: Schweißbacke
- 2: Quersiegelstation
- 3: Schlauchbeutelmaschine
- 4: Bahn, geschlossen
- 4a, 4b: Abschnitt der Bahn 4
- 5: gerader Abschnitt
- 6: gegenläufige Schweißbacke
- 7: Folienschlauch
- 8,9: Antrieb
- 10: Quernaht
- 11: Trenneinrichtung
- 12: Schlauchbeutel
- 13: Kühlluftauslass
- 14: Folienbahn
- 15: Abzug
- 16: Vorratsrolle
- 17: Formschulter
- 18: Längssiegeleinrichtung
- 19: Transportrichtung
- 20: Füllrohr
- 21: antreibendes Teil
- 22: bewegliches Teil
- 23, 24: Richtung
- 25: Führung
- 26: starre Verbindung
- 27: Steuereinrichtung
- 29: Bahn, linienförmig
- 30: Siegelfläche
- 31: Leitung

- ts: Siegelzeit
- Zs: Siegelweg, technisch
- Zseff: effektiver Siegelweg

- A: Bewegungspunkt
- V: Geschwindigkeit
- VP: Parallelkomponente von V
- VN: Normalkomponente von V
- x, y: Bahnkoordinaten
- P: Aufprallpunkt
- S: Siegelebene

## Patentansprüche

1. Verfahren zum Bewegen einer Schweißbacke (1, 6), insbesondere einer Schweißbacke (1, 6) einer Quersiegelstation (2) einer vertikalen Schlauchbeutelmaschine (3), wobei die Schweißbacke (1, 6) mit einem Bewegungspunkt (A) entlang einer geschlossenen Bahn (4) umlaufend oder entlang einer linienförmigen Bahn (29) hin und her bewegt wird, um an einem Aufprallpunkt (P) mit einer Normalkomponente (VN) einer Geschwindigkeit (V) gegen einen Widerstand, insbesondere eine zweite, gegenläufige Schweißbacke (1, 6) zu stoßen, wobei ein Folienschlauch (7) zwischen dem Widerstand und einer Siegelfläche (30) der Schweißbacke (1, 6) zusammengedrückt wird, um den Folienschlauch (7) mittels über die Siegelfläche (30) in den Folienschlauch (7) eingebrachter Wärme bei einem ausgeübten Druck zu verschweißen, und wobei ein Antrieb (8) dazu vorgesehen ist, die Schweißbacke (1, 6) in einer Normalrichtung zu einer Oberfläche des Widerstandes hin zu bewegen, um derart die Normalkomponente (VN) der Geschwindigkeit (V) der Schweißbacke (1, 6) zu erzeugen, **dadurch gekennzeichnet, dass** die Normalkomponente (VN) im Aufprallpunkt (P), welche einer Aufprallgeschwindigkeit der Schweißbacke (1, 6) entspricht, beliebig einstellbar ist.

2. Verfahren nach Anspruch 1, **dadurch gekennzeichnet, dass** die Geschwindigkeit des Antriebs (8) derart geregelt wird, dass die Normalkomponente (VN) des Bewegungspunktes (A) im Aufprallpunkt (P) einem vorgegebenen Sollwert entspricht.

3. Verfahren nach Anspruch 2, **dadurch gekennzeichnet, dass** der Sollwert beliebig einstellbar ist.

4. Verfahren nach Anspruch 1, Anspruch 2 oder Anspruch 3, **dadurch gekennzeichnet, dass** die Schweißbacke (1, 6) einen Folienschlauch (7) mittels Quernähten (10) verschweißt, und mittels einer Trenneinrichtung (11) jeweils ein Schlauchbeutel (12) vom Folienschlauch (7) abgetrennt wird.

5. Verfahren nach mindestens einem der Ansprüche 1 bis 4, **dadurch gekennzeichnet, dass** der Bewegungspunkt (A) mit einer Genauigkeit von 0,01 bis 0,1 mm hinsichtlich seiner Ortskoordinaten in den Richtungen (23, 24) vorgewählt wird.

6. Verfahren nach mindestens einem der Ansprüche 1 bis 5, **dadurch gekennzeichnet, dass** ein Siegelweg (Zs) vorgegeben wird, welcher sich aus einer Vorwärmstrecke (Zv) für ein Vorwärmen des Gegenstandes oder einer Abstreifstrecke zum Abstreifen des Gegenstandes mit vom Gegenstand beabstandeter Schweißbacke (1), einem Aufprallpunkt (P), dem eigentlichen, effektiven Siegelweg (Zseff) und wahlweise einer Kühlstrecke (Zk) zum Abkühlen des Gegenstandes bei vom Gegenstand beabstandeter Schweißbacke (1), währenddessen Kühlluft von einem an der Schweißbacke (1) vorgesehenen Kühlluftauslass (13) auf den Gegenstand geblasen wird, zusammensetzt.

7. Verfahren nach Anspruch 6, **dadurch gekennzeichnet, dass** für die Vorwärmstrecke (Zv) bzw. die Abstreifstrecke, den effektiven Siegelweg (Zseff) und wahlweise die Kühlstrecke (Zk) jeweils ein bezüglich seiner Länge und seinen Ortskoordinaten frei wählbarer, parallel zum geraden Abschnitt (5) verlaufender Abschnitt (4a, 5, 4b) vorgesehen ist, auf dem sich der Bewegungspunkt (A) entlang bewegt.

8. Vorrichtung zum Ausführen des Verfahrens gemäß einem der Ansprüche 1 bis 7, **dadurch gekennzeichnet, dass** die Vorrichtung eine vertikale Schlauchbeutelmaschine (3) ist, welche zum Bewegen der Schweißbacke (1) zwei als elektromagnetischer Linearantrieb, der nach dem Schwebebahnprinzip funktioniert, ausgestaltete, senkrecht zueinander wirkende Antriebe (8, 9) aufweist, wobei ein die Normalkomponente (VN) erzeugender Antrieb (8) von einer Steuereinrichtung (27) betreibbar ist, um eine vorgewählte Normalkomponente (VN) im Aufprallpunkt (P) zu erzeugen.

9. Vorrichtung nach Anspruch 8, **dadurch gekennzeichnet, dass** beide Antriebe (8, 9) getriebelos miteinander und mit der Schweißbacke (1, 6) verbunden sind.

10. Vorrichtung nach Anspruch 9, **dadurch gekennzeichnet, dass** die Schweißbacke (1, 6) über eine starre Verbindung (26) mit dem beweglichen Teil (22) eines horizontal wirkenden Antriebs (8) verbunden ist, und dass das antreibende Teil (21) dieses Antriebs (8) mit dem in vertikaler Richtung beweglichen Teil (22) des anderen Antriebs (9) starr verbunden ist.
